# EUROPÄISCHE PATENTANMELDUNG

(11) **EP 0 926 041 A2**
(43) Veröffentlichungstag der Anmeldung: **30.06.1999**
(21) Anmeldenummer: 98123966.8
(22) Anmeldetag: 17.12.1998
(51) Int. Cl.: B62D 1/18

(54) **Zur Lagerung an einem Karosserieteil eines Kraftfahrzeuges vorgesehene Lenkspindel**

(30) Priorität: 23.12.1997 DE 19757322
(71) Anmelder: Mannesmann VDO Aktiengesellschaft, 60388 Frankfurt am Main (DE)
(72) Erfinder: Bäthis, Peter, 64859 Eppertshausen (DE); Grabis, Raimund, 63762 Grossostheim (DE)
(74) Vertreter: Klein, Thomas, Dipl.-Ing.

(57) **Zusammenfassung**

Eine Lenkspindel eines Kraftfahrzeuges hat ein von einem Verstellrohr (1) in axialer Richtung verschiebbares Teleskopprofilstück (3), in das ein lenkradfernes Profilstück (5) und ein lenkradnahes, zur Halterung eines Lenkrades vorgesehenes Profilstück (4) hineinragen. Das lenkradferne Profilstück (5) lässt sich bei axialen Verschiebungen durch das Verstellrohr (1) ohne Kraftaufwand gegenüber dem Teleskopprofilstück (3) verschieben. Das lenkradnahe Profilstück (4) ist mittels Biegelaschen (18, 19) mit dem Teleskopprofilstück (3) verbunden. Bei einem Aufprall des Fahrers des Kraftfahrzeuges auf das Lenkrad werden die Biegelaschen von dem Teleskopprofilstück gehalten und das lenkradnahe Profilstück aufgerissen. Hierdurch wird die Bewegungsenergie absorbiert.

## Beschreibung

Die Erfindung betrifft eine zur Lagerung an einem Karosserieteil eines Kraftfahrzeuges vorgesehene Lenkspindel für eine Lenkvorrichtung mit einem ein Profilstück zumindest in einem Endbereich umschließenden Teleskopprofilstück und einem Stoßabsorptionsglied zur Absorption von Bewegungsenergie bei einer Relativbewegung des Profilstücks gegenüber dem Teleskopprofilstück.

Solche Lenkspindeln werden in heutigen Kraftfahrzeugen häufig eingesetzt und sind damit bekannt. Das Stoßabsorptionsglied dient dazu, bei einem Crash des Kraftfahrzeuges Bewegungsenergie zwischen dem Teleskopprofilstück und dem Profilstück in plastische Verformung umzuwandeln. Hierdurch werden insbesondere bei einem Aufprall des Kopfes des Fahrers auf das Lenkrad Kopfverletzungen besonders gering gehalten. Nachteilig bei der bekannten Lenkspindel ist, dass bei ihr das Lenkrad nicht vom Fahrer in eine gewünschte Position verstellt werden kann.

Man könnte daran denken, zur Verstellung des Lenkrades das Profilstück in das Teleskopprofilstück hineinzuschieben. Dabei wird jedoch das Stoßabsorptionsglied ebenfalls verstellt oder verformt, so dass sich die manuelle Verstellung sehr schwergängig gestaltet. Weiterhin lässt sich durch diese Gestaltung kein vorgesehener Kraftverlauf bei der Absorption der Bewegungsenergie durch das Stoßabsorptionsglied bei einem Crash erzeugen.

Der Erfindung liegt das Problem zugrunde, eine Lenkspindel der eingangs genannten Art so zu gestalten, dass mit ihr ein Lenkrad möglichst einfach vom Fahrer in eine gewünschte Position verstellbar ist und dass das Stoßabsorptionsglied die Bewegungsenergie bei einem Crash unabhängig von der Stellung des Lenkrades aufnimmt.

Dieses Problem wird erfindungsgemäß dadurch gelöst, dass auf der dem Profilstück abgewandten Seite des Teleskopprofilstücks ein zweites, von einer Verstellvorrichtung relativ zum Teleskopprofilstück in axialer Richtung verschiebbares Profilstück angeordnet ist, wobei entweder das erste Profilstück mit einem Lenkrad und das zweite Profilstück mit einem Lenkgetriebe oder das erste Profilstück mit einem Lenkgetriebe und das zweite Profilstück mit einem Lenkrad verbunden ist.

Durch diese Gestaltung lässt sich die Lenkspindel bei einem Crash und bei der manuellen Verstellung an räumlich voneinander getrennten Stellen zusammenschieben. Beim Crash des Kraftfahrzeuges wird die Bewegungsenergie gleichmäßig wie bei der bekannten Lenkspindel durch eine Verschiebung des einen Profilstücks von dem Stoßabsorptionsglied aufgenommen. Bei einer manuellen Verstellung des Lenkrades wird das Teleskopprofilstück gegenüber dem zweiten Profilstück verschoben. Deshalb lassen sich einfach unterschiedliche Kraftverläufe bei der manuellen Verstellung und der durch den Crash hervorgerufenen Verschiebung vorsehen. Ein weiterer Vorteil dieser Gestaltung besteht darin, dass die erfindungsgemäße Lenkspindel aus wenigen einfach zu fertigenden Bauteilen besteht, die sich zudem außerhalb des Kraftfahrzeuges vormontieren lassen. Hierdurch gestaltet sich die erfindungsgemäße Lenkspindel besonders kostengünstig.

Die Verstellvorrichtung gestaltet sich gemäß einer vorteilhaften Weiterbildung der Erfindung konstruktiv besonders einfach, wenn sie ein das Teleskopprofilstück lagerndes, an dem Karosserieteil in einer vorgesehenen Position feststellbares Verstellrohr aufweist.

Das Stoßabsorptionsglied weist bei einem Crash einen konstanten Kraftverlauf in Abhängigkeit von dem Weg des einen Profilstücks gegenüber dem Teleskopprofilstück auf, wenn es zumindest einen, einteilig mit dem einen Profilstück gefertigten, mit einem Ende an dem Teleskopprofilstück befestigten Aufreißstreifen aufweist. Bei einem Crash des Kraftfahrzeuges reißen die Aufreißstreifen das Profilstück auf, so dass dieses in das Teleskopprofilstück eindringen kann. Hierbei wird die Bewegungsenergie durch das Aufreißen des Profilstücks absorbiert. Die Kraft die zum Aufreißen des Profilstücks erforderlich ist, ist dabei über nahezu den gesamten Weg des Profilstücks konstant.

Das Stoßabsorptionsglied lässt sich gemäß einer anderen vorteilhaften Weiterbildung der Erfindung besonders einfach montieren, wenn die Enden der Aufreißstreifen als in Ausnehmungen des Teleskopprofilstücks eindringende Biegelaschen gestaltet sind. Zur Montage der Lenkspindel lassen sich die Biegelaschen einfach in die Ausnehmungen umbiegen. Bei einem Crash des Kraftfahrzeuges werden die Enden in der Ausnehmung form- und/oder kraftschlüssig gehalten.

Im Normalbetrieb des Kraftfahrzeuges auftretende Kräfte werden gemäß einer anderen vorteilhaften Weiterbildung der Erfindung ohne Verformung oder ein Aufreißen des Stoßabsorptionsgliedes abgestützt, wenn das Stoßabsorptionsglied einen das eine Profilstück und das Teleskopprofilstück durchdringenden Scherstift aufweist. Solche Scherstifte sind in der Technik allgemein gebräuchlich und lassen sich sehr genau auf eine vorgesehene Scherkraft berechnen. Bei einem Crash des Kraftfahrzeuges scheren die Scherstifte ab, so dass das Stoßabsorptionsglied anschließend die Bewegungsenergie absorbieren kann.

Das Stoßabsorptionsglied könnte beispielsweise an einem lenkradfernen Profilstück angeordnet sein. Hierdurch sind an dem Lenkrad jedoch sehr viele Bauteile angeordnet, was zu einer hohen Massenträgheit des Lenkrades führt. Eine hohe Massenträgheit des Lenkrades führt zu einem hohen Verletzungsrisiko beim Aufprall des Kopfes des Fahrers auf das Lenkrad. Die Massenträgheit des Lenkrades lässt sich gemäß einer anderen vorteilhaften Weiterbildung der Erfindung besonders gering halten, wenn das Stoßabsorptionsglied an dem lenkradnahen Profilstück angeordnet ist.

Die Profilstücke und das Teleskopprofilstück müssen zur Übertragung von Drehmomenten einander formschlüssige Verbindungen aufweisen. Die Profilstücke könnten jeweils als Keilwelle ausgebildet sein und formschlüssig in eine entsprechende Innenverzahnung des Teleskopprofilstücks eingreifen. Die Profilstücke und das Teleskopprofilstück gestalten sich jedoch gemäß einer anderen vorteilhaften Weiterbildung der Erfindung besonders kostengünstig, wenn die Profilstücke und das Teleskopprofilstück in aneinanderliegenden Bereichen jeweils einen sechseckigen Querschnitt aufweisen.

Das Lenkrad lässt sich gemäß einer anderen vorteilhaften Weiterbildung der Erfindung manuell durch ein einfaches Verdrehen des Verstellrohrs in seiner Position verstellen, wenn das Verstellrohr ein mit einer zur Befestigung an dem Karosserieteil vorgesehenen Mutter zusammenwirkendes Außengewinde aufweist. Als Mutter eignet sich selbstverständlich auch ein einzelner Bolzen mit einer dem Außengewinde entsprechenden Kontur.

Das Verstellrohr ist gemäß einer anderen vorteilhaften Weiterbildung der Erfindung nach der Einstellung der Position des Lenkrades selbständig in seiner Position gehalten, wenn das Verstellrohr von einem Schneckengetriebe verdrehbar ist. Durch die Selbsthemmung des Schneckengetriebes kann in der Regel auf eine separat anzuordnende Feststelleinrichtung für das Verstellrohr verzichtet werden.

Das Schneckengetriebe könnte beispielsweise mittels einer Kurbel verstellt werden. Hierdurch hat die erfindungsgemäße Lenkspindel jedoch besonders große Abmessungen. Weiterhin erfordert diese Gestaltung die Anordnung des Verstellrohrs und des Teleskopprofilstücks in einer besonders nahen Position am Lenkrad oder eine aufwendige Verlegung einer Kurbelwelle der Kurbel. Das Verstellrohr und das Teleskopprofilstück lassen sich gemäß einer anderen vorteilhaften Weiterbildung der Erfindung an nahezu beliebigen Stellen in der Lenkspindel anordnen, wenn das Schneckengetriebe durch einen zur Befestigung an dem Karosserieteil vorgesehenen Elektromotor antreibbar ist.

Das Lenkrad lässt sich gemäß einer anderen vorteilhaften Weiterbildung der Erfindung besonders schnell in eine vorgesehene Position verstellen, wenn die Verstellvorrichtung eine zur Befestigung an dem Karosserieteil vorgesehene, das Verstellrohr oder das Teleskopprofilstück umgreifende Klemmfaust mit einem die Klemmfaust wahlweise öffnenden oder schließenden Betätigungselement aufweist. Durch diese Gestaltung kann man das Lenkrad nach dem Öffnen der Klemmfaust einfach in die vorgesehene Position verschieben. Anschließend wird die Klemmfaust geschlossen. Das Lenkrad ist dadurch in seiner vorgesehenen Lage kraftschlüssig gehalten.

Das das Stoßabsorptionsglied aufweisende Profilstück wird gemäß einer anderen vorteilhaften Weiterbildung der Erfindung bei einem Crash zuverlässig in dem Teleskopprofilstück geführt, wenn zwischen dem Teleskopprofilstück und dem sich bei einem Crash verschiebenden Profilstück Gleitlagerungen zur axialen Führung des Profilstücks angeordnet sind. Hierdurch wird bei einem Crash ein Verkanten des einen Profilstücks in dem Teleskopprofilstück vermieden.

Bei einem Crash auftretende Bewegungsenergie lässt sich gemäß einer anderen vorteilhaften Weiterbildung der Erfindung einfach in Reibungswärme umwandeln, wenn die Gleitlagerungen zur Erzeugung einer vorgesehenen Reibung bei einer Relativbewegung zwischen dem einen Profilstück und dem Teleskopprofilstück ausgebildet sind. Hierdurch lässt sich ein nahezu beliebiger Kraftverlauf bei der Relativbewegung zwischen dem einen Profilstück und dem Teleskopprofilstück erzeugen. Durch diese Gestaltung lässt sich die erfindungsgemäße Lenkspindel zudem besonders kostengünstig fertigen.

Die Erfindung lässt zahlreiche Ausführungsformen zu. Zur weiteren Verdeutlichung ihres Grundprinzips sind drei davon in der Zeichnung dargestellt und werden nachfolgend beschrieben. Diese zeigt in
- Fig. 1: eine erfindungsgemäße Lenkspindel mit einer Verstellvorrichtung,
- Fig. 2: die Lenkspindel aus Figur 1 in einer Schnittdarstellung,
- Fig. 3, 4: weitere Ausführungsformen der erfindungsgemäßen Lenkspindel.

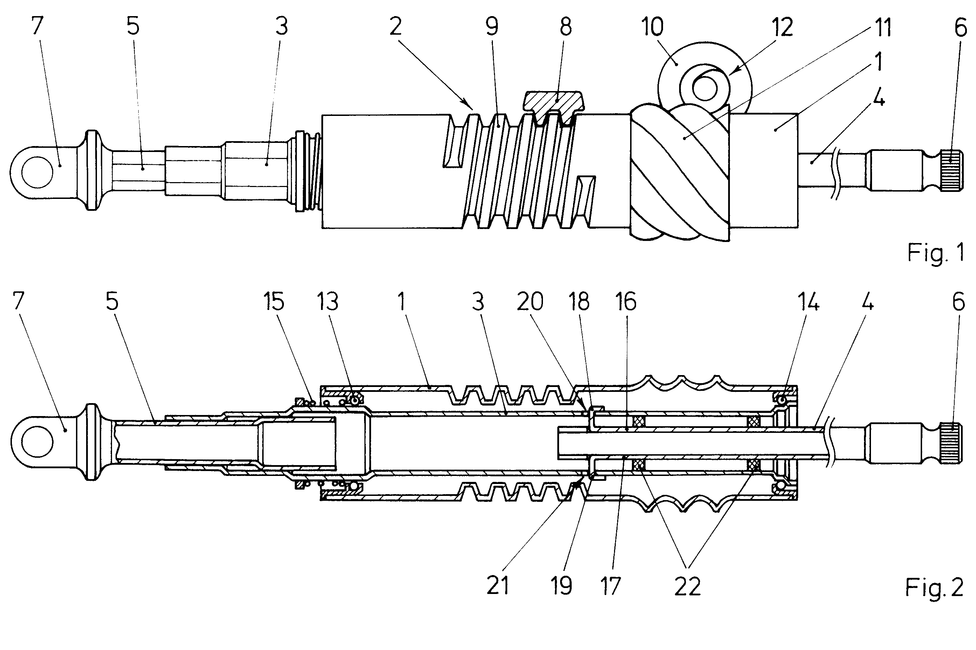

Die Figur 1 zeigt eine erfindungsgemäße Lenkspindel eines Kraftfahrzeuges mit einer ein Verstellrohr 1 aufweisenden Verstelleinrichtung 2. Das Verstellrohr 1 nimmt ein an seinem äußeren Ende sechseckig gestaltetes Teleskopprofilstück 3 auf. In das Teleskopprofilstück 3 ragen ein lenkradnahes Profilstück 4 und ein lenkradfernes Profilstück 5 hinein. Das lenkradnahe Profilstück 4 hat an seinem freien Ende einen Vielzahnstutzen 6 zum Anschluß eines nicht dargestellten Lenkrades. Das lenkradferne Profilstück 5 weist an seinem freien Ende einen Stutzen 7 zum Anschluß an ein Kreuzgelenk eines Lenkgetriebes auf. Die Verstelleinrichtung 2 hat ein auf dem Verstellrohr 1 angeordnetes, mit einer feststehenden Mutter 8 in Eingriff stehendes Außengewinde 9 und ein mittels eines Elektromotors 10 antreibbares Schneckenrad 11 eines Schneckengetriebes 12. Hierdurch wird das Verstellrohr 1 verdreht und durch die feststehende Mutter 8 in axialer Richtung bewegt.

Die Figur 2 zeigt die erfindungsgemäße Lenkspindel aus Figur 1 in einer Schnittdarstellung. In dem Verstellrohr 1 sind Lagerungen 13, 14 für das Teleskopprofilstück 3 angeordnet, wobei eine der Lagerungen 13 zum Ausgleich von Längentoleranzen von einer Feder 15 vorgespannt ist. Die beiden Profilstücke 4, 5 haben einen sechseckigen Querschnitt (auch ein anderer eckiger Querschnitt, z. B. mit vier Ecken, ist denkbar, wobei dann das Telekopprofilstück entsprechend gestaltet ist) und sind mit dem Teleskopprofilstück 3 drehfest verbunden. Das lenkradferne Profilstück 5 lässt sich gegenüber dem Teleskopprofilstück 3 axial verschieben, während das lenkradnahe Profilstück 4 mittels mehrerer Aufreißstreifen 16, 17, deren Enden als Biegelaschen 18, 19 ausgebildet sind und in Ausnehmungen 20, 21 des Teleskopprofilstücks 3 eindringen, an dem Teleskopprofilstück 3 befestigt ist. Weiterhin sind zwischen dem Teleskopprofilstück 3 und dem lenkradnahen Profilstück 4 Gleitlagerungen 22 angeordnet. Durch diese Gestaltung wird ein Drehmoment von dem lenkradnahen Profilstück 4 auf das lenkradferne Profilstück 5 übertragen, während das Verstellrohr 1 durch die Selbsthemmung des Schneckengetriebes 12 feststeht.

Bei einer Drehung des Verstellrohrs 1 verschiebt sich das Teleskopprofilstück 3 in axialer Richtung und führt gegenüber dem lenkradfernen Profilstück 5 eine Relativbewegung aus. Hierdurch lässt sich der Abstand zwischen den beiden Profilstücken 4, 5 und damit die Position des das Lenkrad halternden Vielzahnstutzens 6 manuell verstellen. Wenn bei einem Crash des Kraftfahrzeuges beispielsweise durch einen Aufprall des Kopfes des Fahrers auf das Lenkrad eine große Kraft auf das lenkradnahe Profilstück 4 einwirkt, werden die Biegelaschen 18, 19 der Aufreißstreifen in den Ausnehmungen 20, 21 des Teleskopprofilstücks 3 festgehalten, während sich das lenkradnahe Profilstück 4 in Richtung des lenkradfernen Profilstücks 5 bewegt. Hierdurch reißen die Aufreißstreifen 16, 17 das lenkradnahe Profilstück 4 auf, wodurch ein Teil der Bewegungsenergie absorbiert wird. Bei dieser Bewegung wird das lenkradnahe Profilstück 4 von den Gleitlagerungen 22 geführt.

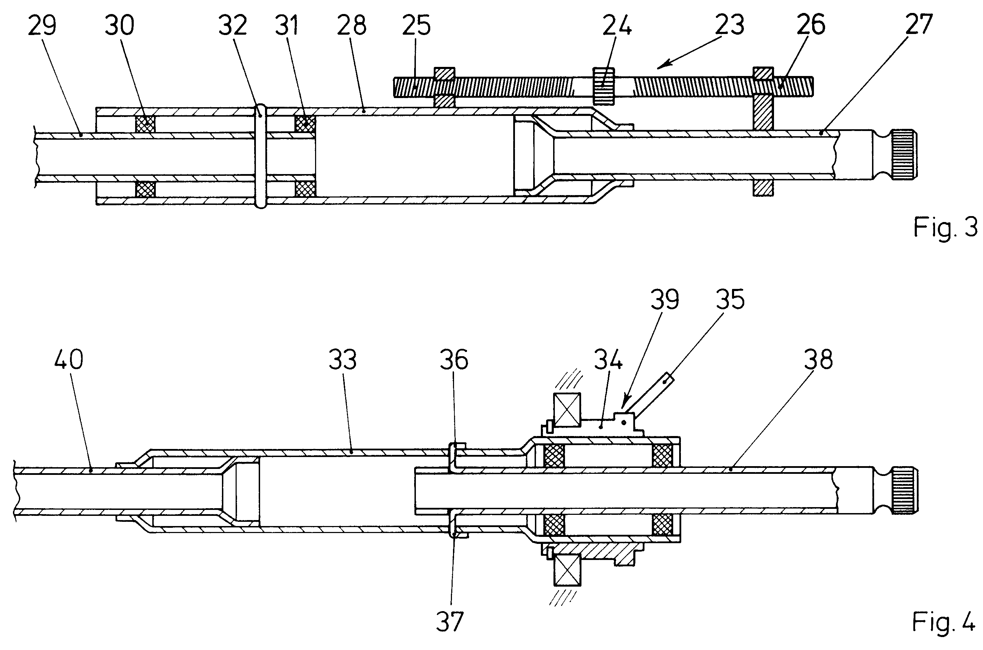

Die Figur 3 zeigt eine weitere Ausführungsform der erfindungsgemäßen Lenkspindel in einer schematischen Darstellung. Hierbei weist eine Verstelleinrichtung 23 eine Stellschraube 24 mit einem Linksgewinde 25 und einem Rechtsgewinde 26 zur manuellen Verschiebung eines lenkradnahen Profilstücks 27 gegenüber einem Teleskopprofilstück 28 auf. In dem dem lenkradnahen Profilstück 27 abgewandten Ende des Teleskopprofilstücks 28 ist ein lenkradfernes Profilstück 29 eingeführt. Das lenkradferne Profilstück 29 ist von Gleitlagerungen 30, 31 und von einem Scherstift 32 in der eingezeichneten Position gehalten. Der Scherstift 32 dient dazu, im Normalbetrieb des Kraftfahrzeuges auftretende Kräfte aufzunehmen und bei einem Crash des Kraftfahrzeuges zu brechen. Nach einem Brechen des Scherstifts 32 kann sich das lenkradferne Profilstück 29 in das Teleskopprofilstück 28 hineinbewegen, wobei es von den Gleitlagerungen 30, 31 geführt wird. Die Gleitlagerungen 30, 31 erzeugen hierbei eine Reibung, durch die die Bewegung gedämpft wird.

Die Figur 4 zeigt eine weitere Ausführungsform der erfindungsgemäßen Lenkspindel, bei der ein Teleskopprofilstück 33 von einer Verstellvorrichtung 39 mit einer gegenüber einem feststehenden Karosserieteil gelagerten Klemmfaust 34 in der eingezeichneten Position gehalten ist. Die Klemmfaust 34 lässt sich mittels eines Hebels 35 öffnen und schließen. Bei geöffneter Klemmfaust 34 kann man das Teleskopprofilstück 33 leicht in axialer Richtung gegenüber einem lenkradfernen Profilstück 40 verschieben. Hierbei bewegt sich ein durch Biegelaschen 36, 37 an dem Teleskopprofilstück 33 befestigtes lenkradnahes Profilstück 38 mit. Bei geschlossener Klemmfaust 34 ist zur Verschiebung des lenkradnahen Profilstücks 38 wie bei der Lenkspindel aus den Figuren 1 und 2 ein hoher Kraftaufwand zum Aufreißen des lenkradnahen Profilstücks 38 erforderlich.

## Patentansprüche

1. Zur Lagerung an einem Karosserieteil eines Kraftfahrzeuges vorgesehene Lenkspindel für eine Lenkvorrichtung mit einem ein Profilstück zumindest in einem Endbereich umschließenden Teleskopprofilstück und einem Stoßabsorptionsglied zur Absorption von Bewegungsenergie bei einer Relativbewegung des Profilstücks gegenüber dem Teleskopprofilstück, **dadurch gekennzeichnet**, dass auf der dem Profilstück (4, 29, 38) abgewandten Seite des Teleskopprofilstücks (3, 28, 33) ein zweites, von einer Verstellvorrichtung (2, 23, 39) relativ zum Teleskopprofilstück (3, 28, 33) in axialer Richtung verschiebbares Profilstück (5, 27, 40) angeordnet ist, wobei entweder das erste Profilstück (4, 38) mit einem Lenkrad und das zweite Profilstück (5, 40) mit einem Lenkgetriebe oder das erste Profilstück (29) mit einem Lenkgetriebe und das zweite Profilstück (27) mit einem Lenkrad verbunden ist.

2. Lenkspindel nach Anspruch 1, **dadurch gekennzeichnet**, dass die Verstellvorrichtung (2) ein das Teleskopprofilstück (3) lagerndes, an dem Karosserieteil in einer vorgesehenen Position feststellbares Verstellrohr (1) aufweist.

3. Lenkspindel nach Anspruch 1 oder 2, **dadurch gekennzeichnet**, dass das Stoßabsorptionsglied zumindest einen, einteilig mit dem einen Profilstück (4) gefertigten, mit einem Ende an dem Teleskopprofilstück (3) befestigten Aufreißstreifen (16, 17) aufweist.

4. Lenkspindel nach Anspruch 3, **dadurch gekennzeichnet**, dass die Enden der Aufreißstreifen (16, 17) als in Ausnehmungen (20, 21) des Teleskopprofilstücks (3, 33) eindringende Biegelaschen (19, 19, 36, 37) gestaltet sind.

5. Lenkspindel nach einem der vorhergehenden Ansprüche, **dadurch gekennzeichnet**, dass das Stoßabsorptionsglied einen das eine Profilstück (29) und das Teleskopprofilstück (28) durchdringenden Scherstift (32) aufweist.

6. Lenkspindel nach einem der vorhergehenden Ansprüche, **dadurch gekennzeichnet**, dass das Stoßabsorptionsglied an dem lenkradnahen Profilstück (4, 38) angeordnet ist.

7. Lenkspindel nach einem der vorhergehenden Ansprüche, **dadurch gekennzeichnet**, dass die Profilstücke (4, 5, 27, 29, 38, 40) und das Teleskopprofilstück (3, 28, 33) in aneinanderliegenden Bereichen jeweils einen sechseckigen Querschnitt aufweisen.

8. Lenkspindel nach einem der vorhergehenden Ansprüche, **dadurch gekennzeichnet**, dass das Verstellrohr (1) ein mit einer zur Befestigung an dem Karosserieteil vorgesehenen Mutter (8) zusammenwirkendes Außengewinde (9) aufweist.

9. Lenkspindel nach einem der vorhergehenden Ansprüche, **dadurch gekennzeichnet**, dass das Verstellrohr (1) von einem Schneckengetriebe (12) verdrehbar ist.

10. Lenkspindel nach Anspruch 9, **dadurch gekennzeichnet**, dass das Schneckengetriebe (12) durch einen zur Befestigung an dem Karosserieteil vorgesehenen Elektromotor (10) antreibbar ist.

11. Lenkspindel nach einem der vorhergehenden Ansprüche, **dadurch gekennzeichnet**, dass die Verstellvorrichtung (39) eine zur Befestigung an dem Karosserieteil vorgesehene, das Verstellrohr oder das Teleskopprofilstück (33) umgreifende Klemmfaust (34) mit einem die Klemmfaust (34) wahlweise öffnenden oder schließenden Betätigungselement (Hebel 35) aufweist.

12. Lenkspindel nach einem der vorhergehenden Ansprüche, **dadurch gekennzeichnet**, dass zwischen dem Teleskopprofilstück (3, 28, 33) und dem sich bei einem Crash verschiebenden Profilstück (4, 29, 38) Gleitlagerungen (22, 30, 31) zur axialen Führung des Profilstücks (4, 29, 38) angeordnet sind.

13. Lenkspindel nach Anspruch 12, **dadurch gekennzeichnet**, dass die Gleitlagerungen (30, 31) zur Erzeugung einer vorgesehenen Reibung bei einer Relativbewegung zwischen dem einen Profilstück (29) und dem Teleskopprofilstück (28) ausgebildet sind.
